# EUROPEAN PATENT APPLICATION

(11) **EP 4 840 616 A1**
(43) Date of publication of application: **18.11.2026**
(21) Application number: 26156142.7
(22) Date of filing: 03.02.2026
(51) Int. Cl.: B29C 64/118, B29C 64/209, B33Y 30/00

(54) **TWIST FLOW NOZZLE FOR 3D PRINTERS**

(30) Priority: 15.05.2025 CN 202510623099
(71) Applicant: LDO SYSTEMS CO.LIMITED, Shenzhen Guangdong Province (CN)
(72) Inventor: Robert Istvan, Lorincz, Chisoda City (RO); SUN, David, Shenzhen (CN); Xu, Shaodi, Shenzhen (CN)
(74) Representative: Valet Patent Services Limited

(57) **Abstract**

Provided is a twist flow nozzle for a 3D printer, which includes a housing and inlaid components. The housing is provided with the inlaid components (21), which enclose an internal molding cavity for plastic material to pass through; the internal molding cavity has an exit hole (23) and an entrance hole (24), with the exit hole being smaller in size than the entrance hole. One end of the housing has an outlet, where plastic material enters in solid form at the entrance hole and is discharged in liquid form the outlet of the housing at the exit hole; the housing and inlaid components are made of thermal conductive materials. The present disclosure enables the entire nozzle to heat plastic, improve its plastic melting ability, change the shape of consumables during a melting process to reduce the thickness of melted plastic, thereby reducing the plastic thermal resistance toward the center of the material.

## Description

### CROSS-REFERENCE TO RELATED APPLICATIONS

This application claims priority to Chinese Patent Application No. 202510623099.9, filed on May 15, 2025, which is hereby incorporated by reference in its entirety.

### TECHNICAL FIELD

The present disclosure relates to the field of 3D printer technologies, and in particular, to a nozzle for a fused deposition modeling (FDM) 3D printer.

### BACKGROUND

3D printing is a newly emerging technology in recent years, also known as additive manufacturing technology, which is a technique for manufacturing solid parts based on three-dimensional CAD data through layer-by-layer material accumulation. 3D printing technology has been widely used in various design and manufacturing fields, including jewelry design, footwear design and manufacturing, industrial design, architectural design, engineering design and construction, automotive design and manufacturing, as well as medical fields such as aerospace and dentistry.

A commonly used printer in 3D printing is the fused deposition modeling (FDM) 3D printer, as disclosed in C202180091464.6, which includes: (a) a feed mechanism including a push motor adapted to push solid wires through a feed conduit; and (b) a print head including a pulling motor adapted to pull the wire from the conduit and guide the wire to a heating block in fluid communication with a print nozzle. The key component in this 3D printer is the nozzle. In the existing technology, CN201610385617.9 has disclosed a method for unclogging the nozzle of a 3D printer using a melt deposition molding process, as well as a device suitable for this unclogging method. Which includes a nozzle fixing heating seat used to fix and heat the nozzle, and a top wire mechanism for unclogging the nozzle of a 3D printer in the melt deposition molding process. A resistance heating rod located inside the fixed nozzle hole, a temperature controller for temperature control, and a stepper motor controller for controlling the movement of the top screw mechanism.

Where the nozzle is a part of a hot end of the 3D printer, and solid consumables are pushed into the hot end, melted in the nozzle, and deposited onto a target print according to the movement of the print head. The nozzle is inserted into the heating block, and the heating block includes a heating rod and a temperature sensing element. The 3D printer electronic device controls the nozzle temperature through this element, usually between 190-300 ° C.

However, the above-mentioned nozzles still use the existing structure and rely on electric heating rods for plastic melting ability, which still needs improvement.

### SUMMARY

To solve the above problems, the primary objective of the present disclosure is to provide a twist flow nozzle for a 3D printer. The twist flow nozzle is designed with a structure that allows an entire nozzle to heat plastic, improving its plastic melting ability. At the same time, the shape of consumables can be changed during a melting process to reduce the thickness of melted plastic, thereby reducing the plastic thermal resistance at the center of the material.

Another objective of the present disclosure is to provide a twist flow nozzle for a 3D printer, which can increase a contact area between nozzle thermal conductive inlaid components and the plastic material, and has a twisted flow channel that can mix hot and cold plastics inside the nozzle, rendering a melting temperature of the plastic more uniform.

To achieve the above objectives, the technical solution of the present disclosure is as follows.

A twist flow nozzle for 3D printers, including a housing and two or more inlaid components. The housing is provided with the inlaid components, and the inlaid components are enclosed to form an internal molding cavity for plastic material to pass through; the internal molding cavity has an exit hole and an entrance hole, with the exit hole being smaller in size than the entrance hole. One end of the housing has an outlet, where plastic material enters in solid form at the entrance hole and is discharged in liquid form through the outlet of the housing at the exit hole; the housing and inlaid components are both made of thermal conductive materials; the housing is made of thermal conductive material and is configured to install the nozzle into a heating element of the 3D printer. The inlaid components are also made of thermal conductive material. In this way, under the action of the heating element, the nozzle is configured to be connected to a heating block of the 3D printer, which improves the plastic melting ability of the nozzle.

In some embodiments of the present disclosure, the 3D printers have a heating element, and a surface of the housing has threads to position the nozzle within the heating element through the threads.

In some embodiments of the present disclosure, side walls of the internal molding cavity formed by the two or more inlaid components have a concave convex structure, and the concave convex structure increases a stroke of the plastic material to enable it to be fully heated, thereby improving the plastic melting ability of the nozzle.

In some embodiments of the present disclosure, the concave convex structure of the inlaid components gradually narrows from the entrance hole to the exit hole, causing the internal molding cavity to be in a reduced state, facilitating a discharge of plastic material in liquid form.

In some embodiments of the present disclosure, the concave convex structure is wavy to enable the plastic material in liquid form to move well.

In some embodiments of the present disclosure, the inlaid components have a first step and a second step, with the first step located at the entrance hole, the first step extends to a middle of the internal molding cavity and is connected to the second step; the second step is higher than the first step and is connected to the exit hole, causing an internal space of the internal molding cavity to shrink.

In some embodiments of the present disclosure, in order to facilitate the entry of solid plastic materials, the first step at the entrance hole has an inclined platform that enlarges an inlet of the first step.

Compared with the existing technology, the technical effects of the present disclosure are as follows.

The twist flow nozzle implemented by the present disclosure improves its plastic melting ability through structural design, and at the same time, can change the shape of consumables during a melting process to reduce the thickness of melted plastic, thereby reducing a plastic thermal resistance toward a center of the material.

At the same time, the twist flow nozzle is provided with specially designed inlaid components, which can increase the surface contact area between the nozzle thermal conductive inlaid components and the plastic material.

The inlaid components of the twist flow nozzle have twisted flow channels, which can push plastic into the channels and mix hot and cold plastics inside the nozzle, rendering a melting temperature of the plastic more uniform and thus improving the melting ability of the plastic.

### BRIEF DESCRIPTION OF DRAWINGS

FIG. 1 is a schematic structural diagram of a twist flow nozzle implemented in the present disclosure.
FIG. 2 is a front view of the twist flow nozzle implemented in the present disclosure.
FIG. 3 is a schematic structural diagram of the twist flow nozzle insert implemented in the present disclosure.
FIG. 4 is a schematic diagram of one side structure of the twist flow nozzle inlaid components implemented in the present disclosure.
FIG. 5 is a schematic diagram of the other side structure of the twist flow nozzle inlaid components implemented in the present disclosure.
FIG. 6 is a cross-sectional view of the twist flow nozzle inlaid components implemented in the present disclosure.
FIG. 7 is another angle sectional view of the twist flow nozzle inlaid components implemented in the present disclosure.
FIG. 8 shows an example of the inlaid components of the twist flow nozzle implemented in the present disclosure.
FIG. 9 is a schematic diagram of a principle of the twist flow nozzle implemented in the present disclosure.
FIG. 10 is a schematic diagram of reducing a diameter of consumables using the twist flow nozzle implemented in the present disclosure.
FIG. 11 is a schematic diagram of a spiral side channel of the twist flow nozzle implemented in the present disclosure.

Numeral reference: 1- housing; 2- inlaid component; 3- internal molding cavity; 11-housing outlet; 12- nut section; 13- bolt section; 21- upper inlay component; 22- lower inlay component; 23- exit hole; 24- entrance hole; 211- second step; 212- first step; 213- inclined platform.

### DESCRIPTION OF EMBODIMENTS

In order to further clarify the purpose, technical solution, and advantages of the present disclosure, the following will provide a detailed explanation of the present disclosure in combination with the accompanying drawings and embodiments. It should be understood that specific embodiments described herein are only used to explain the present disclosure and are not intended to limit the present disclosure.

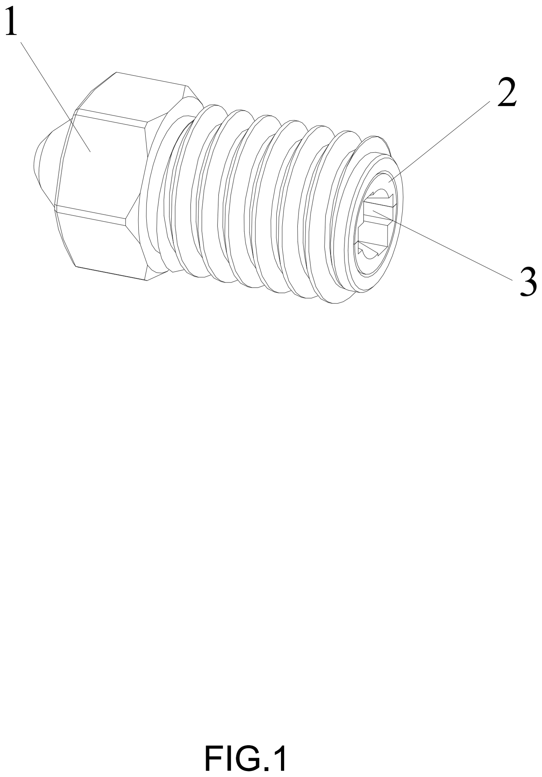

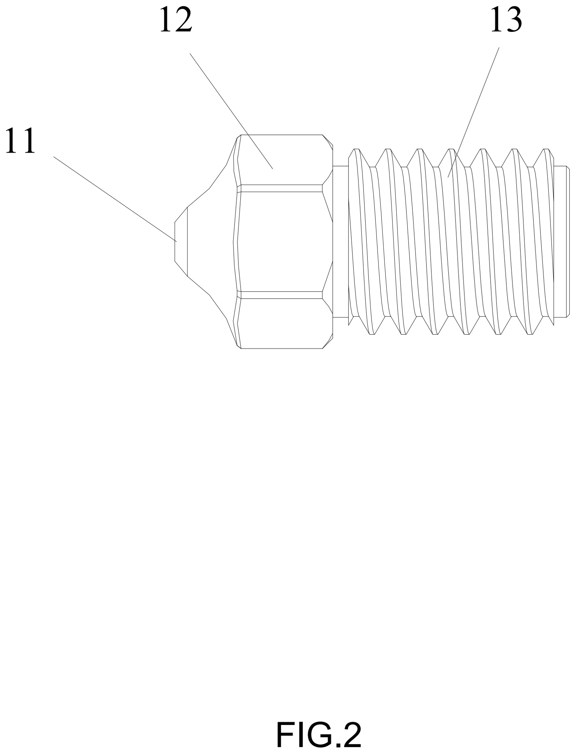

As shown in FIGs. 1 and 2, a twist flow nozzle for a 3D printer implemented by the present disclosure includes a housing 1 and two or more inlaid component 2. In the figure, there are two inlaid components 2. Where an interior of the housing 1 is provided with the inlaid components 2, and the two inlaid components 2 are enclosed to form an internal molding cavity 3 for plastic material to pass through.

The internal molding cavity 3 has an exit hole 23 and an entrance hole 24, with the exit hole 23 being smaller in size than the entrance hole 24. At the same time, one end of the housing 1 has a housing outlet 11, and at an outlet end, there is a nut section 12. The other part of the housing 1 is a bolt section 13, that is, a surface of the housing 1 has threads, and the part with threads is the bolt section 13. Generally, 3D printers have a heating element, and the nozzle can be set in the heating element through the bolt section 13. The nut section 12 plays a role in tightening the bolt section 13.

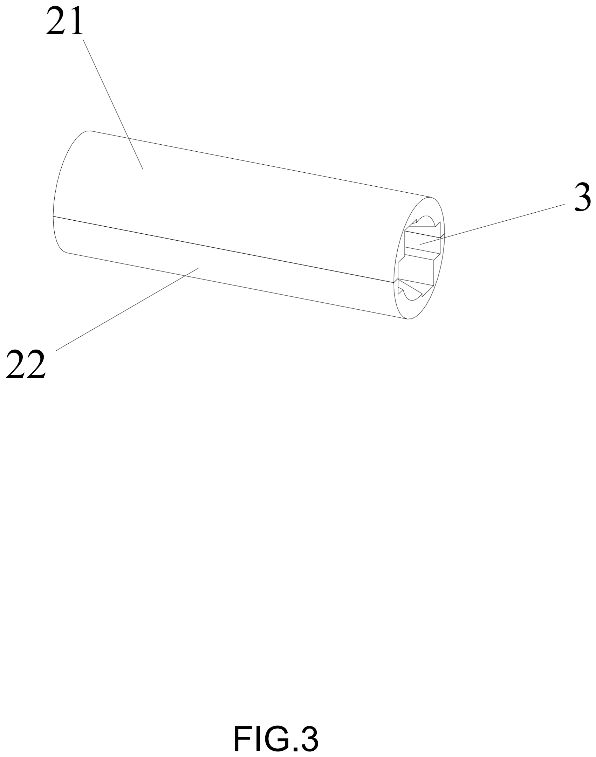

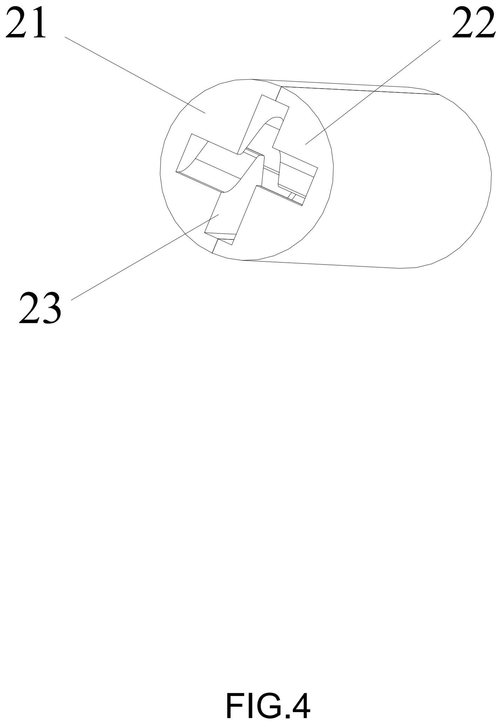

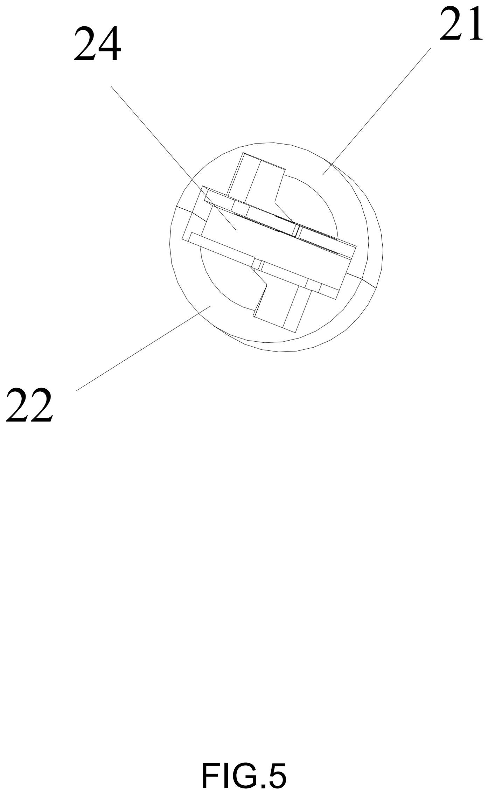

As shown in FIGs. 3, 4, 5, 6, and 7, the two inlaid components 2 are an upper inlay component 21 and a lower inlay component 22. The upper inlay component 21 and the lower inlay component 22 are joined together to form a whole. There is an internal molding cavity 3 in the upper inlay component 21 and the lower inlay component 22. The internal molding cavity 3 is a twisted flow channel, which is a narrow channel. Plastic can be pushed into the twisted flow channel and heated for extrusion.

One end of the two inlaid components 2 is an entrance hole 24, and at the other end thereof is an exit hole 23. Plastic material enters in solid form at the entrance hole 24 and is discharged in liquid form through the housing outlet 11 of the housing 1 at the exit hole 23. The housing 1 and the inlaid components 2 are both made of thermally conductive materials; the housing 1 is made of thermal conductive material and has the feature of installing the nozzle into the heating element of the 3D printer. The inlaid components 2 are also made of thermal conductive material. In this way, under an action of the heating element, the nozzle is configured to be connected to a heating block of the 3D printer, which improves the plastic melting ability of the nozzle.

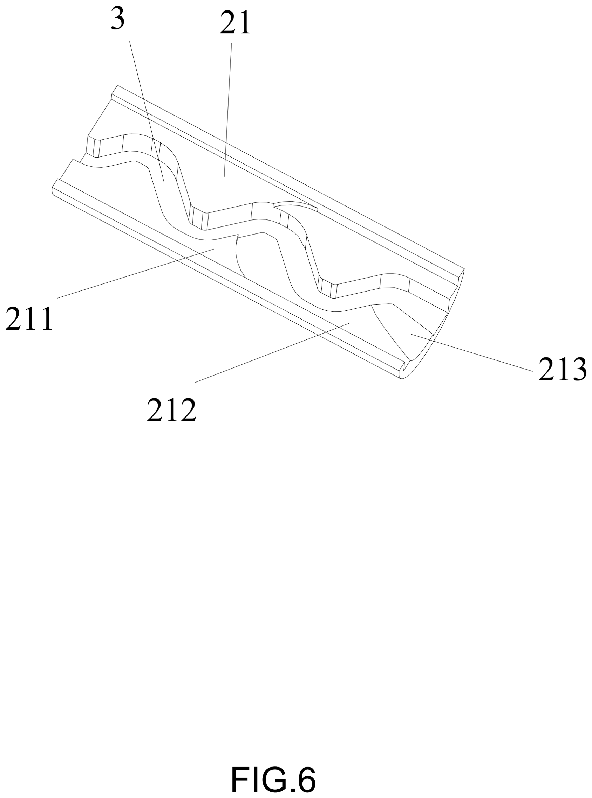

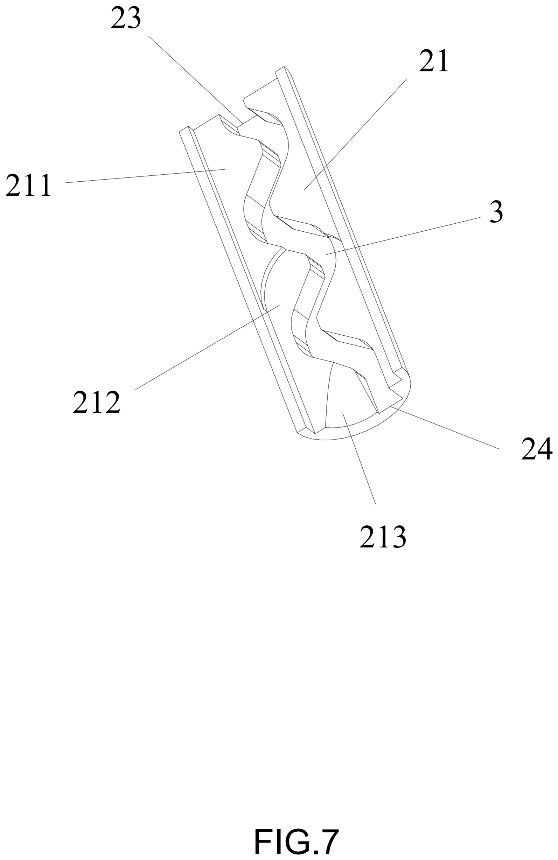

Furthermore, as shown in FIGs. 6 and 7, side walls of the internal molding cavity formed by the two or more inlaid components have a concave convex structure, which increases a stroke of the plastic material and enables it to be fully heated, thereby improving the plastic melting ability of the nozzle.

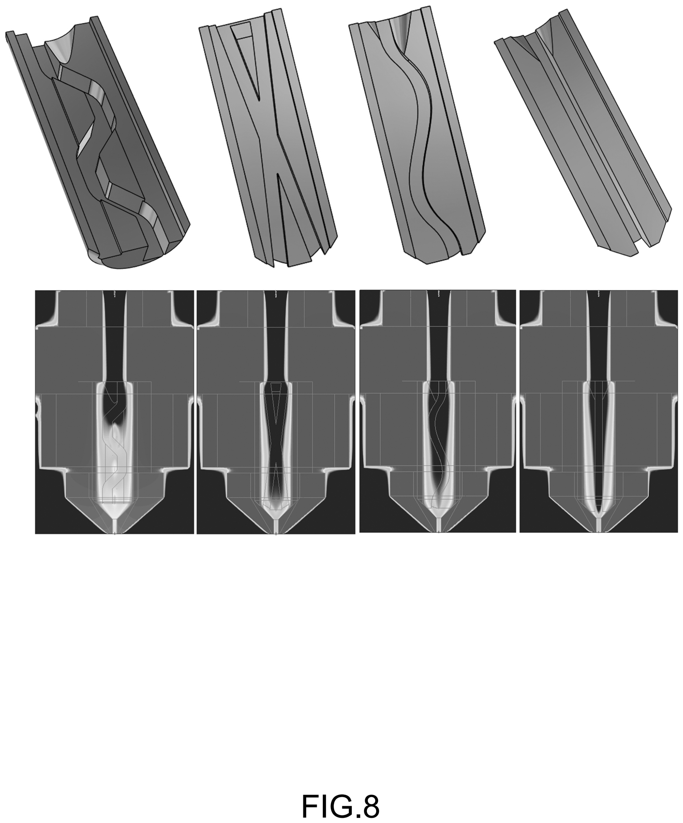

Taking the example of the upper inlay component 21 as shown in FIG. 8, an inner wall of the upper inlay component 21 has a concave convex structure, and the concave convex structure is wavy and gradually shrinks from the entrance hole to the exit hole, making the internal molding cavity in a reduced state, so that the plastic material in liquid form can move well and facilitate the discharge of the plastic material in liquid form.

At the same time, at a side wall end of the internal molding cavity, the upper inlay component 21 has a first step 212 and a second step 211. The first step 212 is located at the entrance hole 24 and extends to a middle of the internal molding cavity 3, connecting to the second step 211. The second step 211 is higher than the first step 212 and connects to the exit hole 23, rendering an internal space of the internal molding cavity 3 to shrink.

Furthermore, in order to facilitate the entry of solid plastic materials, an inclined platform 213 is provided on the first step 212 at the entrance hole 24, and the inclined platform 213 enlarges the entrance of the first step and facilitates the entry of the plastic material.

For the lower inlay component 22, its structure is the same as that of the upper inlay component 21, and will not be repeated here.

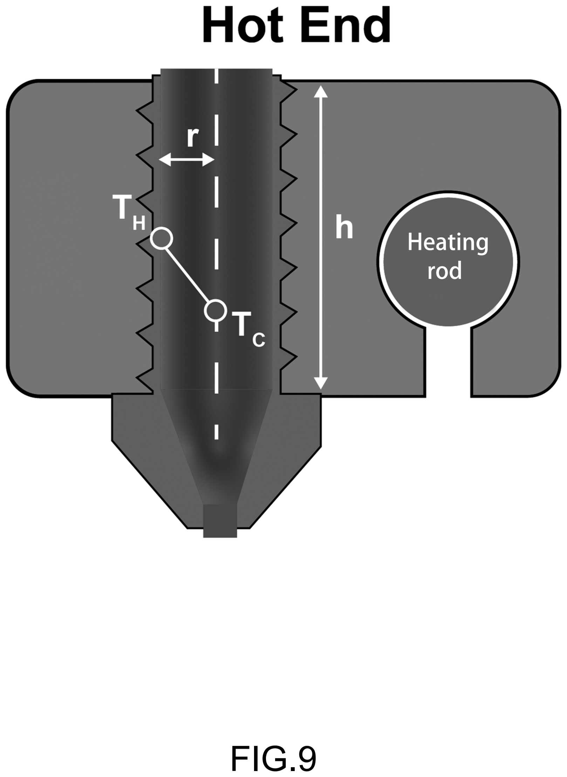

Fourier law helps explain heat transfer through conduction in the hot end. As shown in FIG. 9, Fourier law states that a heat flow rate (Q) is proportional to an area in a normal direction of a heat flow (A), a temperature difference between a hot end wall and a coldest part (core) of the consumable (T_{H}-T_{C}), and inversely proportional to a half of the filament thickness (r), as shown in the following equation, where the constant k is a thermal conductivity of the plastic material.$Q = k \left(A/r\right) \left(TH-TC\right)$

The formula reveals several practical methods for increasing heat flow, including raising the temperature of the nozzle, which will cause more plastic to melt and make melting uncontrollable. Therefore, this application does not adopt it. There are also two methods: increasing the surface area between the nozzle and the plastic, or reducing the filament diameter r. In this application, two methods were adopted: increasing the surface area between the nozzle and the plastic, and reducing the filament diameter r, which can effectively increase the heating flow rate.

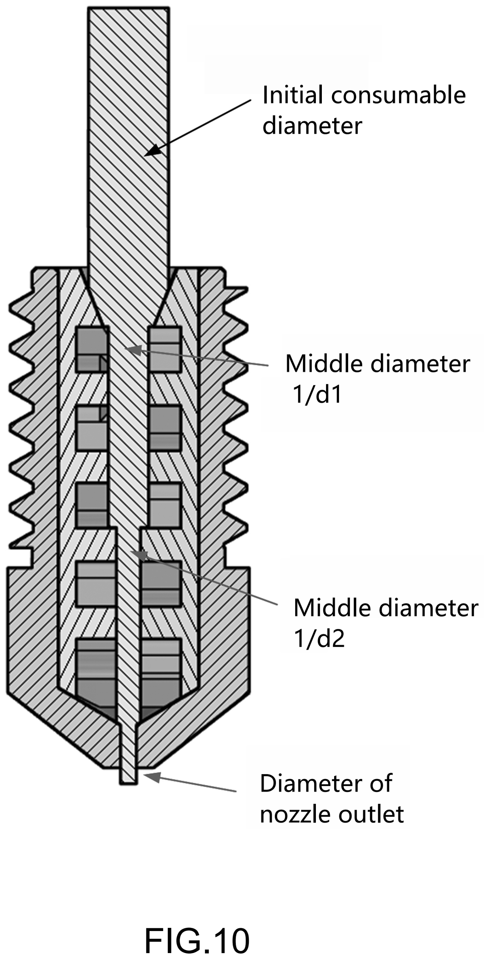

As shown in FIG. 10, a melting capacity of the nozzle is improved by gradually reducing the diameter r of the consumable, which means that more heat can be transferred to the melted plastic. Consumables are pushed through the channel, which narrows in several stages, thereby increasing the heat transferred to the plastic.

The figure shows the main central channel shape of a nozzle model, which can increase the heat transferred to the plastic.

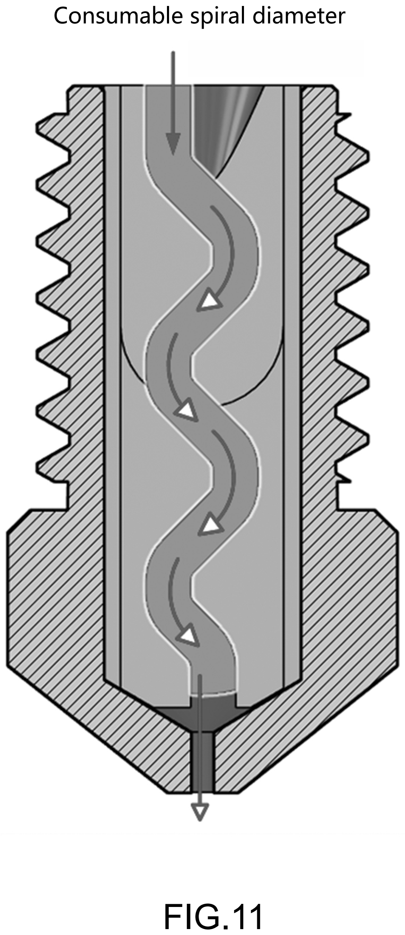

As shown in FIG. 11, the inlaid components include a processed side channel, which is preferably spiral shaped to increase the contact area between the nozzle and the molten plastic. The length of consumables reaching the nozzle exit hole will also increase, allowing more time to transfer heat to the consumables.

Furthermore, spiral on two sides of the inlaid component in opposite directions helps to mix hot and cold consumables, resulting in a more uniform wire temperature.

In summary, the twist flow nozzle implemented by the present disclosure is designed with unique inlaid components through structural design. Both the inlaid components and the housing are made of thermally conductive materials, thereby improving its plastic melting ability. At the same time, the shape of the consumables can be changed during the melting process to reduce the thickness of the melted plastic, thereby reducing the plastic thermal resistance at the center of the material.

At the same time, the twist flow nozzle is provided with specially designed inlaid components, which can increase the contact area between the nozzle thermal conductive inlaid components and the plastic material.

The inlaid components of the twist flow nozzle have twisted flow channels, which can push plastic into the channels and mix hot and cold plastics inside the nozzle, rendering the melting temperature of the plastic more uniform and thus improving the melting ability of the plastic.

The above are only preferred embodiments of the present disclosure and are not intended to limit the present disclosure. Any modifications, equivalent substitutions, and improvements made within the spirit and principles of the present disclosure should be included within the protection scope of the present disclosure.

## Claims

1. A twist flow nozzle for 3D printers, comprising: a housing and two or more inlaid components; wherein the housing is provided with the inlaid components inside, the inlaid components are enclosed to form an internal molding cavity for plastic material to pass through; the internal molding cavity has an exit hole and an entrance hole, with the exit hole being smaller in size than the entrance hole;
one end of the housing has an outlet, where plastic material enters in solid form at the entrance hole and is discharged in liquid form through the outlet of the housing at the exit hole; the housing and inlaid components are both made of thermal conductive materials; the housing is made of thermally conductive material;
side walls of the internal molding cavity formed by the two or more inlaid components have a concave convex structure, and the concave convex structure increases a stroke of the plastic material to enable it to be fully heated, thereby improving the plastic melting ability of the nozzle;
the inlaid components have a first step and a second step, with the first step located at the entrance hole, the first step extends to a middle of the internal molding cavity and is connected to the second step; the second step is higher than the first step and is connected to the exit hole, causing an internal space of the internal molding cavity to shrink.

2. The twist flow nozzle for 3D printers according to claim 1, wherein a surface of the housing has threads to position the nozzle in a heating element through the threads.

3. The twist flow nozzle for 3D printers according to claim 1, wherein the concave convex structure of the inlaid components gradually narrows from the entrance hole to the exit hole, causing the internal molding cavity to be in a reduced state, facilitating a discharge of plastic material in liquid form.

4. The twist flow nozzle for 3D printers according to claim 1, wherein the concave convex structure is wavy to enable the plastic material in liquid form to move well.

5. The twist flow nozzle for 3D printers according to claim 1, wherein the first step at the entrance hole has an inclined platform that enlarges an inlet of the first step.

6. The twist flow nozzle for 3D printers according to claim 1, wherein the inlaid components comprise a processed side channel, and the side channel is spiral shaped.

7. The twist flow nozzle for 3D printers according to claim 6, wherein spiral directions on two sides of the side channel are opposite, which helps to mix hot and cold consumables and make a wire temperature more uniform.
